# EUROPEAN PATENT SPECIFICATION

(11) **EP 3 179 845 B1**
(45) Date of publication and mention of the grant of the patent: **18.09.2019**
(21) Application number: 15744582.6
(22) Date of filing: 30.07.2015
(51) Int. Cl.: A01G 24/28, A01G 24/44

(54) **BLEND FOR A COMPRESSED GROWING MEDIUM**
MISCHUNG FÜR EIN KOMPRIMIERTES WACHSTUMSMEDIUM
MÉLANGE POUR MILIEU DE CULTURE COMPRIMÉ

(30) Priority: 31.07.2014 NL 2013285
(43) Date of publication of application: 21.06.2017
(73) Proprietor: Bas van Buuren B.V., 3155 ZG Maasland (NL)
(72) Inventor: MANGER, Peter Duco, NL-3155 ZG Maasland (NL); KHODABAKS, Mohamed Rashied, NL-3155 ZG Maasland (NL); AMSING, Jozef Georgius Maria, NL-3155 ZG Maasland (NL); DIJKSHOORN, Jacobus Hendrik, NL-3155 ZG Maasland (NL)
(74) Representative: EP&C
(86) International application number: PCT/EP2015/067602
(87) International publication number: WO 2016/016407

(56) References cited:
- EP-A1- 1 145 621
- WO-A1-91/13845
- WO-A2-2013/022847
- GB-A- 759 257

## Description

### Technical Field

The invention relates to a blend for a compressed growing medium, the compressed growing medium and a method for making the same. More in particular, it relates to a peat-based blend for making so-called press pots and or press blocks, which are compressed to 1.1 to 10 times the initial volume, e.g., with a standard soil block machine (also known as soil block maker or soil blocker). More in particular still, the invention relates to the use of xanthan gum or a mixture of xanthan gum and a pseudoplastic polysaccharide for improving adhesiveness of peat

### Background Art

Various forms of growing media are known. The most elementary is soil. Many inventions have been made with respect to soil, soil improvers, and replacements thereof. An example thereof is WO2013/022847, which concerns soilless mixes used for plant growth.

A special form of growing media are compressed growing media. For instance, from WO91/13845 cultivation substrates of peat are known. As described therein, it is known to use compressed peat in the shape of various types of briquettes and the like as a growing substrate for seed plants and cuttings.

The compressed growing medium may be pot-shaped ("press pot") or pellet shaped or compressed into blocks, bricks or briquettes to facilitate its use. In this case, it is also important that the shaped growing medium has excellent stability and robustness. Compressed growing media may be sold as finished product, or prepared on site by compressing a formulated blend of suitable components in combination with a suitable amount of water.

Compressed growing media are used for many crops like bedding, plants and pot plants, vegetables and herbs. The medium acts as a foundation for the plant roots. Compressed growing media are quite commonly used for a variety of crops throughout the world including: bell peppers, brassica, capsicum, cucumber, eggplant, lettuce, melons, strawberry, tomato, zucchini, carnation, chrysanthemum, gerbera, gypsophila, lisianthus, rose, etc. They may be used as a hydroponic growing medium.

Growing media include base material components like peat (black peat, white peat, peat moss [also known as sphagnum peat]), sand, clay, vermiculite, perlite, pumice, sphagnum moss (i.e., the live moss growing on top of a peat bog), compost, coir, bark, wood fiber, or a mixture thereof. The blends may be enriched with nutrients, fertilizers, pH modifiers and other components. Specific requirements therefore apply to the components used in compressed growing media.

The required properties of a press pot or press block or similar compressed growing medium, and/or for the components used for making the same may be listed as follows. It should:
1. Be able to be handled with a standard soil block maker;
2. Have adhesive capacity and robustness both directly after compression and also after drying to 70% w/w water content;
3. Have high structural stability, with optimum ratio between air and water retention capacity;
4. Have high buffering capacity (high cation exchange capacity, or CEC and high anion exchange capacity, or AEC);
5. Have a good wettability;
6. Be free of (competing) weed seeds and human and plant pathogens including nematodes;
7. Have suitable pH value, nutrient level, nutrient buffering;
8. Be free from harmful constituents which might inhibit germination and growth, and
9. Consist of components with long-term availability at a reasonable price with uniform properties.

A particularly suitable base material component in compressed growing media is peat or having peat as major component. Peat may be mixed with additional base material components and further additives. Additional base material components such as wood fiber, green-waste compost and coir pith, in limited amounts, may be a valuable complement to peat.

Peat (turf) is an accumulation of partially decayed vegetation or organic matter that is unique to natural areas called peat lands or mires. Based on degree of decay, a distinction may be made between black peat, brown peat and white peat or peat moss. One of the most common components of peat is decayed sphagnum moss, although many other plants can contribute.

A particularly suitable base material component in compressed growing media is German black peat. German black peat is a decomposed and dark sphagnum moss. It is produced by loosening a small layer before winter commences and then to be frozen throughout the winter. The frost will expand the water within the sphagnum cells and allows the structure of this peat to change in such way that it improves its re-wetting capability. German black peat more so than black peat from other regions has highly desirable properties with respect to adhesive capacity, in particular, but also with respect to water retention, water holding capacity, structure, constant chemical properties and high buffering capacity. German black peat is particularly suitable as an ingredient in compressed growing media. Since black peat and German black peat in particular shows more inter-particle adhesion than white peat, the compressed growing media made from German black peat are more robust as compared to those made of white peat. White peat on the other hand provides elasticity. A very suitable compressed growing medium therefore typically comprises a mixture of German black peat and white peat (e.g., 80/20 on % by volume). By way of example, lettuces are commonly grown in press pots composed of German black peat/white peat in a volume ratio of about 90/10. Likewise, Chrysanthemum are grown in press pots composed of German black peat/white peat in a ratio of about 70/30.

Horticulture is more and more automated, with lines of robots producing and handling compressed pots and blocks and the like. Robustness of compressed growing media is therefore of great importance, wherein robustness is a combination of the adhesiveness and the firmness of the blend. Hence the use of compressed growing media based on 100% German black peat or mixtures comprising at least 70 % by volume of German black peat. However, German black peat is in limited supply. Hence, there is a need for an alternative. Moreover, press pots and blocks are made with standard soil block machines that are optimized to handle mixes based on German black peat. Required is therefore a method to improve the adhesiveness of peat, other than German black peat, to the level of German black peat, and by doing so create a substitute that can be used in a blend from which compressed growth media can be made without the necessity to invest in the equipment. Alternative base materials are unfortunately not always satisfactory and moreover in short supply. The available quantity of alternative base materials is not nearly sufficient to produce growing media without peat in the required quantities - neither for Germany, Europe or the rest of the world.

As indicated, from WO2013/022847 a soilless blend is known for use for plant growth. No information is provided for compressed growing media. This document therefore provides no solution to the shortage of compressed growth media that meet the requirements for robustness, due to the shortage of German black peat.

From US8544206 a method of making a growing medium is known, comprising: providing a dehydrated bulking agent, in this case coir; and compressing said dehydrated bulking agent, including coir, at a volume-to-volume ratio greater than about 3:1; wherein said compressed growing medium is not hydrophobic and maintains a compressed shape without a water soluble binder until hydrated. This invention addresses the need to prevent easy germination and seed mortality in pre-seeded soil mixtures, such as germinating mixes, potting soils, peat cubes and compressed pellets, that have been used in forestry, agricultural, commercial and home uses.

A related case is US8381439, which discloses a growing medium, comprising: a dehydrated bulking agent having a moisture content of less than 15%, wherein the dehydrated bulking agent further comprises a water-retentive polymer; and at least 5% by weight dehydrated animal by-product combined with said bulking agent; wherein said combined bulking agent and said dehydrated animal by-product are compressed at a volume-to-volume ratio ranging from about 3:1 to about 10:1 to form a compressed growing medium; wherein said compressed growing medium is free of water soluble binder; and wherein said compressed growing medium maintains a compressed shape until hydrated. The animal by-product preferably comprises dehydrated worm castings.

In JP200232821 a culture medium for raising seedlings and growing plants is described having light weight to facilitate the transportation, free from troubles of contamination caused by scattering, enabling easy disposal and effective for stable support of a plant by dehydrating a specific slurry with a mesh and drying the product to adjust the density within a prescribed range. The slurry is composed of a composition having a Canadian standard freeness (CSF) of ≥550 mL and composed mainly of cellulose fiber.

Growing media which can be used instead of peat are also known from GB2237012 and GB2252553. In this case, use is made of fibrous vegetable material in association with lignite, an organic material derived from the prolonged decomposition of plant matter. Unfortunately, due to their chemical composition (compost) and rigid- and coarse structure (wood fiber and coir) these alternative base materials can only be used in limited amounts in e.g. press pots made with soil block machines. In other words, standard soil block machines currently employed cannot or not without investment be used when alternative base materials are applied. There is therefore a need for a suitable, durable substitute that can be used with little or no investments in the current equipment.

This problem has now been addressed.

### Summary of the Invention

Accordingly, the invention relates to a blend for a compressed growing medium, comprising:
- a base material component (I);
- an additive (II);
- optional additional base material components (III), and
- optional enrichment additives (IV),
   wherein
- component (I) is a peat or a mixture of peats;
- additive (II) is xanthan gum or a mixture of xanthan gum with one or more pseudoplastic polysaccharides, present in the blend in an amount from 0.1 to 20 kg/m³; and
- if white peat is used as one of the type of peats in component (I), then this is done in combination with a minor amount of clay as component (III),
which blend in combination with water can be compressed at a volume-to-volume ratio ranging from about 10:9 to about 10:1 to form a compressed growing medium having a robustness when measured by testing the pressure at break of a press pot using a compression test system MultiTest-d, by Mecmesin, equipped with a blunt 5 mm chisel-shaped bit, of at least 40 kPa for a fresh press pot made with water added in an amount to obtain a moisture level of between 74 to 82% w/w and at least 100 kPa when dried to a moisture level of 70% w/w.

The invention also relates to the compressed growing medium and a method for making the same. Moreover, the invention relates to a method for improving the adhesiveness of a blend for a compressed growing medium, based on peat. In other words, the invention relates to the use of xanthan gum or a mixture of xanthan gum and a pseudoplastic polysaccharide for improving adhesiveness of peat

### Description of the embodiments

### Base material component (I):

The blend for a compressed growing medium according to the present invention comprises a peat as major base material and optionally one or more other components described hereafter. Pure German black peat needs no improvement with regards to robustness and adhesive capacity and hence a growing medium consisting solely of German black peat and the additive (II) has little added value. Of greater interest is a blend comprising up to 90% by weight of black peat, with the remainder being a different kind of peat used as substitute. Indeed, the more German black peat can be substituted, for instance with black peat from other locations and/or (preferably) with white peat combined with clay.

Thus, component (I) may consist of pure German black peat, pure black peat from other locations, pure white peat, other types of peat showing different degrees of decay, or any mixture thereof.

Of particular interest is white peat, also referred to as peat moss. If white peat is used as one of the type of peats in component (I), then this is done in combination with an effective amount of clay as component (III) to add plasticity, robustness and weight to the compressed growing medium, so as to ensure sufficient robustness of at least 40 kPa for fresh press pots and at least 100 kPa for press pots dried to 70% by weight water when tested with a compression test system MultiTest-d, by Mecmesin, equipped with a blunt 5 mm chisel-shaped bit. For instance, it is expected that lettuce and chrysanthemum may be grown in press pots composed of white peat, clay, and xanthan gum, optionally comprising minor amounts of nutrients and fertilizers as enrichment components (IV).

### Additive (II):

Xanthan gum is a polysaccharide. Polysaccharides are polymeric carbohydrate molecules composed of long chains of monosaccharide units bound together by glycosidic linkages and on hydrolysis give the constituent monosaccharides or oligosaccharides. They range in structure from linear to highly branched. Xanthan gum belongs to the class of polysaccharides referred to as exopolysaccharides or extracellular polysaccharides (EPS), also known as bacterial capsular polysaccharides. It is manufactured using a natural (microbial) fermentation process. It may be produced by the fermentation of glucose, sucrose or lactose. The microorganism Xanthomonas campestris produces xanthan gum as protective coating, which may be precipitated and ground into a powder of various mesh sizes. It is used as a food additive (E number 415). Xanthan gum rendered free from viable cells of Xanthomonas Campestris is available as standard all-purpose grade (80 mesh size); with a fine mesh (200 mesh size) for faster hydration, or agglomerated (60 mesh size) to be easy dispersible. For the purpose of the present invention, only food-approved grade pseudoplastic exopolysaccharides are suitable.

Most (exo)polysaccharides exhibit useful visco-elastic properties when dissolved in water at very low levels. This makes various liquids used in everyday life, such as some foods, lotions, cleaners, and paints, viscous when stationary, but much more free-flowing when even slight shear is applied by stirring or shaking, pouring, wiping, or brushing. This property is named pseudoplasticity or shear thinning. For the purpose of the current invention, the property of pseudoplasticity is important.

The current invention is illustrated with food-approved xanthan gum or mixtures of polysaccharides containing food-approved xanthan gum. Suitable mixtures include xanthan gum and locust beam gum, xanthan gum and konjac, as well as xanthan gum and guar gum since they form a synergistic mixture. Other suitable pseudoplastic polysaccharides that may be used in combination with xanthan gum include agar-agar, gum Arabic, carrageen, cassia gum, chitosan, cellulose derivatives like hydroxypropylcellulose, methylcellulose, hydroxypropylmethylcellulose and hydroxyethylcellulose, diutan gum, emulgan, fenugreek gum, mannan, and pectin. A mixture of xanthan gum and a pseudoplastic polysaccharide may be used, but preferably xanthan gum is used alone.

The amount of xanthan gum or mixture thereof with another pseudoplastic polysaccharide, may be from 0.1 to 20 kg/m³. More may be used, but generally provides no advantage. Indeed phytotoxicity may play an adverse roll. Moreover, the adhesiveness may be too high, adversely affecting the handleability of freshly prepared press pots. If less is used, then the contribution is too small. Preferably the amount is in the range from 0.2 to 10 kg/m³, more preferably from 0.5 to 5.0 kg/m³, still more preferably from 0.8 to 1.6 kg/m³. The amount depends on the nature, hence characteristics of the peat that is used as well as the other components, if any.

### Additional base material components (III):

As indicated, the xanthan gum or mixture thereof with a pseudoplastic polysaccharide, is used in a blend with peat (preferably white peat) as major component of the blend, optionally comprising additional base material components in limited amounts. The additional base material components of the blend (wherein peat is the major component) may include inorganic and/or organic components, e.g., clay, sand, vermiculite, perlite, gravel, pumice, sphagnum moss, compost, coir, bark, wood fiber, or a mixture thereof. The actual amount of such additional base material components depends on the requirements of the farmer and the crops. Suitably, such additional base material components may be present in an amount up to 30% by volume.

Clay is a synergistically effective component, in particular clay with a lutum content of at least 5%. As indicated, clay may add plasticity, robustness and weight to the compressed growing medium. Moreover, in view of the water holding capacity, the clay preferably has a smectite content of at least 10%. Clay is particularly preferred as it has been found that clay together with the xanthan gum or mixture thereof with a pseudoplastic polysaccharide after mixing and upon compression may form an organo-mineral network thereby forming stable aggregates that contribute to better plant growth and development. Preferably clay is present in a minor amount.

In particular for blends with white peat as major base material component, an effective amount of clay may be essential to ensure sufficient robustness. The amount of clay therefore depends on the amount of white peat used as component (I). Other components of the blend will likewise have an effect on the amount of clay that is required to meet the robustness condition. The effective (minor) amount can be easily determined by model experimentation. For instance, the amount of clay can be about 3% by volume on the total composition, but preferably varies from 1 to 5 % by volume. A blend consisting of peat moss as sole base material, without clay or other components (I) or (III) does not meet the requirement of robustness and therefore is not in accordance with the present invention.

### Enrichment additives (IV):

It is preferred that the compressed growing media contain plant nutrients, lime and fertilizers and the like. The additives are optional, as the other components of the blend may already provide sufficient nutrients, pH modifiers, fertilizers and the like.

Preferably, the compressed growing medium according to the present invention has a sufficiently rich nutrient mineral content for the crop to be grown therein. The nutrient mineral content may be measured by electrical conductivity (EC). Preferably it has a nutrient mineral content of from 0.1 to 10 mS/cm, more preferably from 0.1 to 2 mS/cm. Thus, fertilizers may be added up to said level. Generally this means that fertilizers may be added up to an amount of 1.5 kg/m³.

Moreover, the compressed growing medium preferably has a pH that is suitable for the crop to be grown therein. Preferably the pH is in the range of 4-7. Thus, lime and other pH modifiers may be added in amounts to achieve the desirable pH level. Generally this means that pH modifiers may be added up to an amount of 10 kg/m³.

### The blend of components:

The blend of components (I), (II) and optionally (III) and/or (IV) may be provided in the form of a kit of parts, in particular wherein the additive (II) is kept dry and separate from the other components of the blend. In this case the xanthan gum or mixture thereof with the pseudoplastic polysaccharide may be kept dry, avoiding contamination and degradation.

Alternatively, the xanthan gum or the mixture is "dry blended" with the other blend components. White peat may be dehydrated to 40-50% by weight (% w/w) on water content. Clay usually has a very low moisture content of about 1-20% w/w. At this low moisture content, the components are considered "dry". The combination thereof has a very low moisture content of about 40-50% w/w. After mixing the dry blend may be compressed by a bigbail machine up to e.g. 1:4 in volume. The latter method, so-called bigbailing under dry conditions, is preferred for export purposes. The bails of compressed blend so produced are kept dry until they are used. When used, the bails are broken, moisture is added to the desired level, and then press pots and or press blocks may be made, e.g., with a standard soil block machine.

### Use of xanthan gum for improving the adhesiveness of peat:

The invention also provides the use of xanthan gum for improving the adhesiveness of peat, in particular the adhesiveness of peat other than German black peat. Use is made of the property that Xanthan gum forms a polymer network when wetted. The network disaggregates as individual polymer molecules align in the direction of the shear force during the subsequent compression. The extent of this disaggregation is proportional to the shear rate. The network reforms rapidly, however, when shear is removed. Surprisingly, when xanthan gum or a mixture thereof with a pseudoplastic polysaccharide is mixed with peat, wetted and compressed, the resulting peat-based blendhas increased adhesiveness, which is not found when xanthan gum is mixed with peat without being compressed and sufficiently wetted.

### Method for preparing a compressed growing medium:

For the compressed growing medium of the present invention, it is important that the wetted xanthan gum or mixture thereof with the pseudoplastic polysaccharide and other components of the blend are compressed. The act of compression ensures rapid mixing of the additive (II) with the other components. This is important to ensure homogeneity, stability and robustness of the compressed growth medium. For instance, mere addition of (dry) xanthan gum to already compressed components does not result in a suitable growth medium.

The method of the present invention comprises the steps of blending base material component (I) and optional components (III) and (IV), if any, with additive (II) and a predetermined amount of water to form a wet blend, and compressing the same at a volume-to-volume ratio ranging from about 10:9 to about 10:1.

Optionally, the method involves fractioning, i.e., removal of bulky or lumpy material if present from the base material components. Fractioning of peat may be done with a star screen or other type of screen. If any bulky material is found, then this may be reduced in size by any suitable means and then used. The star screen may also help in reducing lumps of additive (II), if any.

The blending may be done with a mill, blender or other mixer. The purpose is to create a homogeneous blend. Xanthan gum or the mixture thereof with the pseudoplastic polysaccharide may be mixed with the other (dry) components whereupon water is added. This method is also suitable for bigbailing. Alternatively, Xanthan gum or the mixture thereof may be mixed with wet peat and other components (if any). Mixing Xanthan gum with water first is not recommended, since this causes the formation of lumps and thus prevents the homogeneous mixing thereof.

Water is added to a predetermined moisture level to form a wet blend. The moisture level depends on the components of the blend, preferences of the grower, the type of machinery applied, and the type of crop. For instance, water may be added in an amount to obtain a moisture level of between 70 to 85% w/w. Addition of high amounts of water is preferred from a cost perspective (being the cheapest component of the compressed growing medium). However, using too high amounts of water adversely impacts the freshly prepared compressed growing media. They may be too fragile and soggy to handle. When less than 70% w/w is used, then the components of the raw material blend may be too dry to form a cohesive product. Preferably a moisture content of from 72 to 85% w/w, more preferably of from 74 to 82% w/w is used. The wetted blend may then be compressed.

Preferably, the blend, including the added amount of water, is optimized so as to ensure that the change in volume, when allowing a freshly prepared press pot to dry, remains small. Generally a change in dimensions of at most +/- 10% is considered quite acceptable.

Compression to the desired volume-to-volume ratio is obtained by applying pressure. The wetted blend is preferably compressed under a condition to get the desired density, volume, air content and robustness. The pressure is preferably applied by a soil block machine. Seeds and the like may be added prior to compression, as discussed hereafter. The wetted blend, whether pre-seeded or non-seeded, may be pressed at a volume-to-volume ratio ranging from about 10:9 to about 10:1 to form a compressed growing medium. Preferably, it is compressed at a volume-to-volume ratio ranging from about 3:2 to about 4:1. More preferably, it is compressed at a volume to volume ratio range from about 2:1 to about 2.5:1. As indicated, this is preferably performed with a standard soil block machine.

Suitably, the wetted blend is compressed into pots, blocks, bricks, slabs, wafers, pellets, cubes, triangles and compressed growing media of any other shape. If the compressed growing medium includes seeds, its size and shape may be determined by the size of the included seeds and what is necessary to protect those seeds during compression. The terms "wafer" and "pellet" as used herein are not limited to any one shape, but may include shapes that are spherical, elliptical, egg-shaped, square, rectangular, crescent, convex, concave, flat or any other regular or irregular shape. The compressed pots, blocks, bricks, slabs, wafers and pellets may then be packaged in pouches, grow-bags, cans, canisters, jars, boxes, and other packages known to those of skill in the art. The compressed growing medium, if containing seeds, may be vacuum packed to keep the environment dry and consistent to increase seed life longevity. The compressed growing media may also contain voids or recesses in any form, to facilitate the introduction of crop. Preferably, the wetted blend is compressed into individual pots or trays of pots.

Other methods for forming compressed growing media may be used.

As indicated, preferably a soil block machine is used wherein the wetted blend is directly compressed into press pots and the like. The press pots may then be used as plugs. Alternatively, a filling machine may be used wherein a tray with pot-shaped containers is filled with the wetted blend directly introduced therein and then subjected to compression. Notches may be provided to facilitate the separation of the individual pots and the like.

When used on site, growers may include seeds or crops. In this case, typically the compressed growing medium is subsequently dehydrated during the first period of propagation of the crop to a moisture content of about 70% w/w or less. Indeed, one of the advantages of the compressed growing media of the current invention as compared to those based on German black peat, is that the moisture content may be reduced to below 60% w/w. This is an advantage in that the product may subsequently be transported with a significantly lower moisture content to the customer or retailer. This safes on travel expenses. This is an additional advantage vis-à-vis compressed media based on German black peat as the latter would encounter problems with regards to slow rehydration when wetted after drying to 60% w/w or below.

The invention further relates to the use of the new compressed growing medium for growth of any one of the crops selected from bell peppers, brassica, capsicum, cucumber, eggplant, lettuce, melons, strawberry, tomato, zucchini, carnation, chrysanthemum, gerbera, gypsophila, lisianthus, and roses. The invention is particularly useful for the growth of lettuces and chrysanthemum, where currently significant amounts of German black peat are used. The invention is illustrated by the following examples.

### Examples

### Series I

Model experiments were carried out using (I) blend consisting of German Black Peat; (III) an 80/20 % by volume mixture of German Black Peat and White Peat (neither according to the invention), and (IX) a blend of White Peat, clay and xanthan gum (97% by volume White Peat, 3% by volume clay and 1.0 kg/m³ of a food-approved grade xanthan gum). Water was added to a content of 74%, 78% and 82% w/w to establish the optimum moisture range in which the pressing has to take place.

The model experiments were carried out with press pots. The press pots were made by weighing the components and blending the same. The blend was thoroughly mixed with water and allowed to stand for at least 30 minutes. The wet blend was then transferred to a soil block machine.

In actual practice press pots directly after pressing in a tray should have a robustness of at least 40kPa in order to safely apply seedlings, and retain their shape in the tray. When the press pots -after some weeks- are pulled out of the tray and sorted by the plant robot of the plant grower, they are typically dried to about 70% w/w moisture content. In actual practice, in order to remain intact when handled by the plant robot, the press pots should then have a robustness of at least 100 kPa.

Press pots were made with a dimension of 31x31 mm² and a height of 40 mm. These press pots were compressed at a volume-to-volume ratio ranging from about 2:1 to about 2.5:1 (achieving a dry bulk density after compression ranging from 200 to 300 kgm³).

The robustness was measured by testing the pressure at break using a compression test system MultiTest-d, by Mecmesin, equipped with a blunt 5 mm chisel-shaped bit.

The experiments were performed with a freshly prepared pot-shaped compressed growing medium, as well as a compressed growing medium slowly dried (in about 2 weeks on silica gel) to 70% by volume to mimic customer conditions when press pots are handled and sorted by a plant robot. The results are shown in the below Table.

**Table 1**

| Blend | Freshly prepared press pots | | | Press pots dried to 70% w/w | | | Moisture ranges within specs (%) | | Optimal conditions calculated | | | | |
|---|---|---|---|---|---|---|---|---|---|---|---|---|---|
| | Pressure at break (kPa) | | | Pressure at break (kPa) | | | Min | Max | Moisture (%w/w) | Δ Volume (%) | Robustness Fresh (kPa) | Robustness Dried (kPa) | Complies |
| | At moisture content (% w/w) | | | | | | | | | | | | |
| | 74 | 78 | 82 | 74 | 78 | 82 | | | | | (> 40) | (> 100) | |
| I | 81 | 49 | 24 | 111 | 175 | 189 | 77 | 80 | 80 | -8 | 40 | 183 | Yes |
| II | 79 | 48 | 36 | 124 | 158 | 204 | 76 | 81 | 80 | -5 | 42 | 181 | Yes |
| III | 42 | 44 | 25 | 69 | 117 | 132 | 77 | 79 | 78 | 3 | 45 | 123 | Yes |
| IV | 22 | 29 | 30 | 26 | 24 | 38 | n.a. | n.a. | n.a. | 28 | 30 | 38 | No |
| V | 38 | 43 | 31 | 38 | 56 | 65 | n.a. | n.a. | n.a. | 2 | 56 | 65 | No |
| VI | 45 | 41 | 40 | 63 | 91 | 96 | n.a. | n.a. | n.a. | -1 | 40 | 96 | No |
| VII | 66 | 62 | 44 | 117 | 165 | 199 | 76 | 80 | 80 | -10 | 53 | 182 | Yes |
| VIII | 38 | 43 | 31 | 43 | 52 | 61 | n.a. | n.a. | n.a. | 4 | 31 | 61 | No |
| IX | 92 | 55 | 33 | 84 | 133 | 118 | 77 | 81 | 80 | -8 | 44 | 126 | Yes |

Criteria for robustness are dependent on specific requirements of the grower, type of crop and type of machinery applied. However, assuming freshly prepared press pots should have a pressure at break of at least 40 kPa, data show that many comparative pots made with blends with a moisture content of 82% w/w water were too weak. The maximum % moisture to press blends I, III, IX are respectively about 80, 78 and 80% w/w. (Calculated assuming linearity). It is safe to assume for the dried pots that a pressure at break of at least 100 kPa is requested to be safely handled by machinery.

Within the optimum moisture range per blend it can be concluded that freshly prepared press pots with blend IX are equally robust as the pots made with 100% black peat (I), and more robust than blend III with 80/20% black/white peat. For the dried pots blend IX also is more robust than blend III with 80% black peat and 20% white peat, but blend I with 100% black peat performs best. However, for the dried pots made with all three blends in the optimum moisture range, the robustness is assumed to be more than enough to be safely handled by the machinery.

Again, these experiments are model experiments. By addition of additional components the press pots may be further optimized to suit the requirements of the grower and of the crop.

### Series II

Additional model experiments were carried out similar to the experiments of Series I. The results are included in the above Table. The composition of the samples in Table 1 is as follows, wherein (VII and IX are in accordance with the present invention, whereas the rest is comparative):
(I) 100% black peat,
(II) a mixture of 88% black peat and 12% standard white peat,
(III)a mixture of 80% black peat and 20% standard white peat,
(IV) 100% standard white peat,
(V) a blend of 97% standard white peat with 3% by volume clay,
(VI) a blend of standard white peat with 1.1 kg/m³ xanthan gum,
(VII) a blend of 97% standard white peat with 3% by volume clay and 1.1 kg/m³ xanthan gum,
(VIII) a blend of 97% standard white peat with 3% by volume clay and 1.1 kg/m³ guar gum,
(IX) a blend of 97% standard white peat with 3% by volume clay and 1.0 kg/m³ xanthan gum.

What can be concluded from the results is the following:
- Table 1 shows that the robustness of 100% German black peat (I) -as a reference- is very good. Criteria of robustness directly after pressing and after drying to 70% are easily met.
- When replacing 12, respectively 20% by weight of the German black peat with white peat (blends II and III) the robustness (adhesiveness & firmness) deteriorates. However, the blends still comply to the standard.
- When a composition comprising solely 100% white peat was used as a press pot blend (IV) the robustness did not comply with the standard for fresh press pots nor with the standard for dried press pots . Blend (IV) is therefore not suitable for use as a press pot medium.
- Combining white peat with a clay (with a significant amount of smectite) (blend V) does not improve the robustness significantly in comparison with blend (IV). This indicates that the use of a clay is not good enough to form a suitable press pot under standard conditions. Blend (V) is therefore not suitable for use as a press pot medium.
- When 1.1 kg/m³ xanthan gum is added to the 100% white peat (blend VI) a modest increase vis-a-vis blend (IV) in robustness is seen directly after pressing, and blend (VI) therefore complies to the standard for fresh press pots. Also an increase in robustness is observed for dried pots. However this is not enough to comply to the standard for dried press pots. Blend (VI), is therefore not suitable for use as a press pot medium.
- When both xanthan gum and a clay are added (blend VII), the overall performance is the same as the reference 100% black peat (blend I): Criteria of robustness directly after pressing and after drying to 70% are easily met. This proofs that a synergistic effect exist between xanthan gum and the clay used herein with regard to robustness.
- The combination of the same clay with guar gum when added to white peat (blend VIII) does not meet the criteria of robustness. Which indicates that xanthan gum is suitable for this application, and guar gum is not.
- The concentration of xanthan gum in combination with 3% by volume can be lowered to 1.0 kg/m³ (blend IX) whilst still complying to the standard.

## Claims

1. Blend for a compressed growing medium comprising:
• white peat (I);
• xanthan gum or a mixture of xanthan gum with one or more pseudoplastic polysaccharides, (II), present in the blend in an amount from 0.1 to 20 kg/m3;
• clay (III), preferably in an amount from 1 to 5 % by volume on the blend, and
• optional enrichment additives (IV),
wherein the blend in combination with water is compressed at a volume-to-volume ratio ranging from 10:9 to 10:1 to form a compressed growing medium, having a robustness when measured by testing the pressure at break of a press pot using a compression test system MultiTest-d, by Mecmesin, equipped with a blunt 5 mm chisel-shaped bit, of at least 40 kPa for a fresh press pot made with water added in an amount to obtain a moisture level of between 74 to 82% w/w and at least 100 kPa when dried to a moisture level of 70% w/w.

## Patentansprüche

1. Mischung für ein komprimiertes Kultursubstrat, umfassend:
• Weißtorf (I);
• Xanthangummi oder eine Mischung ausf Xanthangummi mit einem oder mehreren pseudoplastischen Polysacchariden, (II), die in der Mischung in einer Menge von 0,1 bis 20 kg/m3 vorliegen,
• Ton (III), vorzugsweise in einer Menge von 1 bis 5 Vol.-% auf der Mischung, und
• optionale Anreicherungszusätze (IV), worin die Mischung in Kombination mit Wasser in einem Volumen/Volumen-Verhältnis im Bereich von 10:9 bis 10:1 komprimiert ist, um ein komprimiertes Kultursubstrat zu bilden, welches eine Robustheit aufweist, wenn diese durch Prüfen des Bruchdrucks eines Presstopfes mit einem Druckprüfsystem MultiTest-d von Mecmesin, ausgestattet mit einem stumpfen 5 mm meißelförmigen Bohrer, von mindestens 40 kPa für einen frischen Presstopf, der mit Wasserzugabe in einer Menge hergestellt wird, um einen Feuchtigkeitsgehalt zwischen 74 und 82 Gew.-% und mindestens 100 kPa beim Trocknen auf einen Feuchtigkeitsgehalt von 70 Gew.-% zu erhalten, ausgestattet ist, gemessen wird.

## Revendications

1. Mélange pour milieu de culture comprimé comprenant :
- de la tourbe blanche (I) ;
- de la gomme xanthane ou un mélange de gomme xanthane avec un ou plusieurs polysaccharides pseudoplastiques (II) présents dans le mélange en une quantité allant de 0,1 kg/m³ à 20 kg/m³ ;
- de l'argile (III), préférablement en une quantité allant de 1% à 5% en volume du mélange ; et
- des additifs d'enrichissement optionnels (IV),
dans lequel le mélange, en combinaison avec de l'eau, est comprimé dans un rapport de volume à volume allant de 10:9 à 10:1 pour former un milieu de culture comprimé, ayant une robustesse, mesurée en testant la pression de rupture d'un bloc comprimé utilisant un système de test de compression MultiTest-d, de Mecmesin, équipé d'un burin émoussé de 5 mm, d'au moins 40 kPa pour un bloc comprimé frais fait avec de l'eau ajoutée dans une quantité telle qu'un niveau d'humidité compris entre 74% et 82% en poids est obtenu et au moins 100 kPa lorsque le bloc comprimé est séché à un niveau d'humidité de 70% en poids.
